# EUROPEAN PATENT APPLICATION

(11) **EP 2 495 146 A1**
(43) Date of publication of application: **05.09.2012**
(21) Application number: 10826787.3
(22) Date of filing: 27.10.2010
(51) Int. Cl.: B60W 10/08, B60L 9/18, B60L 11/08, B60W 10/06, B60W 20/00

(54) **ELECTRIC DRIVE VEHICLE**

(30) Priority: 27.10.2009 JP 2009246504
(71) Applicant: Hitachi Construction Machinery Co., Ltd., Bunkyo-ku, Tokyo 112-8563 (JP)
(72) Inventor: SASAKI Masataka, Hitachi-shi Ibaraki 319-1292 (JP); YASUDA Tomohiko, Tsuchiura-shi Ibaraki 300-0013 (JP)
(74) Representative: Beetz & Partner
(86) International application number: PCT/JP2010/069105
(87) International publication number: WO 2011/052655

(57) **Abstract**

PROBLEM TO BE SOLVED:

To provide an electric drive vehicle that can be implemented inexpensively with a simple configuration, and includes a long-life power supply circuit of a diesel boost system.

SOLUTION:

A prime mover 03; a generator 04 driven by the prime mover 03; a power supply circuit 30 that uses a generator voltage VR obtained by rectifying a generator output PR and a trolley voltage VL obtained by rectifying an incoming power PL from a trolley feeder 10 as a driving voltage of a load device 12; and a control means 20 that controls drive of the prime mover 03 and opening and closing of a plurality of switches and the like included in the power supply circuit 30 are included. The power supply circuit 30 is configured by connecting a pair of second rectifying means D1 that rectifies the incoming power from the trolley feeder 10 and a second switch S2 connected in series therewith in parallel with a pair of first rectifying means 05 that rectifies the generator output PR and a first switch S1 connected in series therewith, and connecting a third switch S3 in parallel with the second switch S2.

## Description

### TECHNICAL FIELD

The present invention relates to an electric drive vehicle used as a mining truck and the like, and in particular to a configuration of a power supply circuit including a power receiving unit that receives a trolley power from a trolley feeder.

### BACKGROUND ART

Drive systems of electric drive vehicles include: a mechanical type of mechanically transmitting a torque of a prime mover to a tire; a diesel electric type of driving a generator with a prime mover, and driving an electric motor with an output voltage of the generator; a trolley type of driving an electric motor with a trolley voltage received from a trolley feeder; and a hybrid type of combining the diesel electric type and the trolley type (see Patent Literatures 1 and 2).

The system described in Patent Literature 2 is in particular called a diesel boost system among the hybrid type; a power supply circuit having two rectifiers for obtaining a generator voltage is installed inside a vehicle; a DC voltage for driving an electric motor is obtained by connecting the two rectifiers in series in a diesel mode of driving the electric motor only with a generator voltage; and a DC voltage for driving the electric motor is obtained by connecting the two rectifiers in parallel, and then connecting a trolley voltage received from a trolley feeder in series with the parallel circuit in a diesel boost mode of driving the electric motor with both the generator voltage and the trolley voltage. Because with the diesel boost system, a large prime mover and a large generator that are necessary under high loads need not be included, miniaturization of an electric drive vehicle and saving of fuel can be achieved.

### CITATION LIST

### PATENT LITERATURES

Patent Literature l: Japanese Unexamined Patent Application Publication No. 6-510418 (Figs. 1 to 4)
Patent Literature 2: US6646360B2 (Figs. 6 to 7)

### SUMMARY OF INVENTION

### TECHNICAL PROBLEM

Nevertheless, because the power supply circuit of a diesel boost system disclosed in Patent Literature 2 includes, inside the vehicle: two rectifiers for obtaining a generator voltage; a plurality of switches for connecting the two rectifiers in series or in parallel; and a plurality of switches for connecting a trolley voltage received from a trolley feeder in series with the generator voltage, there are problems that the configuration becomes complicated, and costs of the power supply circuit and furthermore the electric drive vehicle become high.

Also, because in the power supply circuit, in a case of switching the circuit connection from the diesel boost mode of connecting a trolley voltage received from the trolley feeder in series with the generator voltage to the diesel mode of supplying only the generator voltage to the electric motor, it is necessary to cut off switches connected in series with the rectifiers in an energized state, there is a problem that life of the switches are remarkably shortened. When a degradation-resistant product that is compatible with cutoff in an energized state is used for the switches, such an inconvenience is resolved, but it is not preferable because a cost of the power supply circuit becomes high by that much.

The present invention has been made in view of such an actual situation of the conventional techniques, and an object thereof is to provide an electric drive vehicle that can be implemented inexpensively with a simple configuration, and includes a long-life power supply circuit of a diesel boost system.

### SOLUTION TO PROBLEM

To attain the object, the present invention has a configuration that an electric drive vehicle includes: a prime mover; a generator driven by the prime mover; a power supply circuit that uses a generator voltage obtained by rectifying a generator output and a trolley voltage obtained by rectifying an incoming power from a trolley feeder as a driving voltage of a load device; the load device driven by a driving voltage output from the power supply circuit; and control means that controls drive of the prime mover and opening and closing of a plurality of switches and the like included in the power supply circuit to switch a power feed mode of the driving voltage fed to the load device between a diesel mode of feeding only the generator voltage to the load device and a diesel boost mode of feeding the generator voltage and the trolley voltage that are connected in series to the load device, wherein the power supply circuit is configured by connecting a pair of second rectifying means that rectifies the incoming power from the trolley feeder and a second switch connected in series therewith in parallel with a pair of first rectifying means that rectifies the generator output and a first switch connected in series therewith, and connecting a third switch in parallel with the second switch.

With the configuration, because the power supply circuit includes the only one first rectifying means for rectifying a generator output, the configuration of the power supply circuit can be simplified as compared with a case that the power supply circuit includes two rectifiers. Also, because the configuration of the power supply circuit is simplified, control of the power supply circuit by the control means can be made easy.

Also, the present invention has a configuration that, in the above-mentioned configuration, as the second rectifying means, one having a smaller forward voltage during energization than that of the first rectifying means is used.

With the configuration, because a current that has been passing from the trolley feeder to the first rectifying means is commutated automatically to the second rectifying means when switching from the diesel boost mode to the diesel mode, a generator current can be made zero. Thus, after confirming that the generator current has become zero, the generator voltage and the trolley voltage can be parallelized by opening and closing operations of a required switch.

Also, the present invention has a configuration that, in the above-mentioned configuration, in a case of switching the power feed mode of the driving voltage to the load device from the diesel mode to the diesel boost mode, the control means controls drive of the prime mover to vary the generator voltage to be equal to or less than an on-voltage of the second rectifying means temporarily.

With the configuration, because an opening operation of a necessary switch can be performed in a state that the generator voltage is varied to be equal to or less than the on-voltage of the second rectifying means temporarily, damages to the switch at the time of switching from the diesel mode to the diesel boost mode can be prevented. Also, because it is not necessary to use, as the switch, a degradation-resistant product that is compatible with cutoff in an energized state, a cost of the power supply circuit can be prevented from becoming high.

Also, the present invention has a configuration that, in the above-mentioned configuration, in the case of switching the power feed mode of the driving voltage to the load device from the diesel boost mode to the diesel mode, the controls means controls the drive of the prime mover to vary the generator voltage to be equal to or less than the on-voltage of the second rectifying means temporarily.

With the configuration, because an opening operation of a necessary switch can be performed in a state that the generator voltage is varied to be equal to or less than the on-voltage of the second rectifying means temporarily, damages to the switch at the time of switching from the diesel boost mode to the diesel mode can be prevented. Also, because it is not necessary to use, as the switch, the degradation-resistant product that is compatible with cutoff in the energized state, the cost of the power supply circuit can be prevented from becoming high.

Also, the present invention has a configuration that, in the above-mentioned configuration, the load device is a motor and an inverter for motor drive, and as the inverter for motor drive, one that is driven most efficiently with a driving voltage of the motor in the diesel boost mode is used.

With the configuration, because performance of the inverter for motor drive can be maximized, a high-performance power supply circuit can be realized.

Also, the present invention has a configuration that, in the above-mentioned configuration, third rectifying means is connected in parallel in a power receiving circuit that receives a power from the trolley feeder.

With the configuration, because when a pantograph falls off from the trolley feeder, the power receiving circuit switches from that via the trolley feeder to a route through the third rectifying means; thus, a power supply to the load can be maintained, and at this time, a mode of supplying a power to the load can be switched to the diesel mode by opening and closing operations of a required switch.

Also, the present invention has a configuration that, in the above-mentioned configuration, a fourth switch is connected in parallel with the second rectifying means.

With the configuration, it becomes possible to make the trolley voltage a load voltage by switching the second switch and the fourth switch into a closed state. In this case, because a trolley current is supplied to the load through the second switch and the fourth switch without passing the second rectifying means, conduction loss at the second rectifying means can be prevented. In addition, because when conduction loss at the second rectifying means is removed, it becomes unnecessary for a cooling system of a system to cool the second rectifying means, system efficiency can be improved.

### ADVANTAGEOUS EFFECTS OF INVENTION

Because, according to the present invention, a power supply circuit has a configuration that a pair of second rectifying means that rectifies an incoming voltage from a trolley feeder and a second switch connected in series therewith is connected in parallel with a pair of first rectifying means that rectifies a generator output and a first switch connected in series therewith, and a third switch is connected in parallel with the second switch, the power supply circuit needs to include the only one first rectifying means for rectifying the generator output, the configuration of the power supply circuit can be simplified as compared with a case that the power supply circuit includes two rectifiers, and a low-cost electric drive vehicle can be achieved. Also, because the configuration of the power supply circuit is simplified, control by the control means can be made easy, energization cut-off of switches at the time of switching from the diesel mode to the diesel boost mode or switching from the diesel boost mode to the diesel mode can be avoided, and damage prevention of the switches and furthermore easier maintenance of an electric drive vehicle can be achieved.

### BRIEF DESCRIPTION OF DRAWINGS

[Fig. 1] Fig. 1 is a diagram showing an electrical system of an electric drive vehicle according to a first embodiment.
[Fig. 2] Fig. 2 is a flowchart showing an operation procedure of various switches and the like at a transition from a diesel mode to a diesel boost mode.
[Fig. 3] Fig. 3 is a graph showing changes in voltage values and changes in current values at a transition from the diesel mode to the diesel boost mode.
[Fig. 4] Fig. 4 is a flowchart showing an operation procedure of various switches and the like at a transition from the diesel boost mode to the diesel mode.
[Fig. 5] Fig. 5 is a graph showing changes in voltage values and changes in current values at a transition from the diesel boost mode to the diesel mode.
[Fig. 6] Fig. 6 is a diagram showing an example that an electric motor and an inverter for electric motor drive are included as a load device of the electric drive vehicle according to the first embodiment.
[Fig. 7] Fig. 7 is a diagram showing an electrical system of an electric drive vehicle according to a second embodiment.
[Fig. 8] Fig. 8 is a diagram showing an electrical system of an electric drive vehicle according to a third embodiment.

### DESCRIPTION OF EMBODIMENTS

Hereinafter, modes for carrying out the electric drive vehicle according to the present invention are explained with each embodiment. Although in the following embodiments, a diesel electric system electric drive vehicle is explained as an example, the present invention can be applied to a type of an electric drive vehicle that drives a load device using a power stored in a storage battery.

### First Embodiment

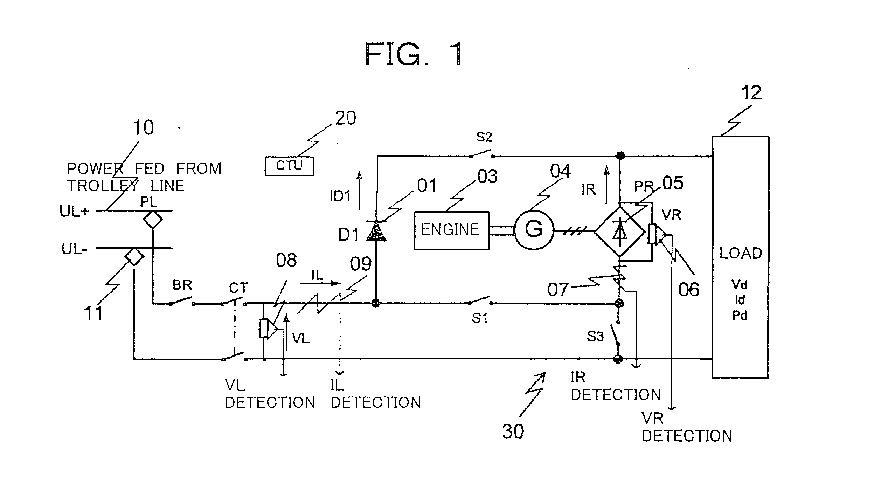

As shown in Fig. 1, an electric drive vehicle according to the first embodiment is mainly configured with: a prime mover (diesel engine) 03; a generator 04 driven by the prime mover 03; a power supply circuit 30 that uses a generator voltage VR obtained by rectifying a generator output PR and a trolley voltage VL obtained by rectifying an incoming power PL from a trolley feeder 10 as a driving voltage of a load device 12; and control means (CTU) 20 that controls drive of the prime mover 03 and opening and closing of a plurality of switches and the like included in the power supply circuit 30 to switch a power feed mode of a driving voltage fed to the load device 12 between a diesel mode of feeding only the generator voltage VR and a diesel boost mode of feeding the generator voltage VR and the trolley voltage VL that are connected in series.

The power supply circuit 30 consists of: a diode bridge (first rectifying means) 05 that rectifies the generator output PR; a pantograph 11 that receives a power by physically contacting the trolley feeder 10; a circuit breaker BR that cuts off a power receiving circuit that receives a power from the trolley feeder 10 when an overcurrent flows into the power receiving circuit; a switch CT that connects an incoming power PL from the trolley feeder 10 to an internal circuit; a third switch S3 that closes when only a power output from the diode bridge 05 is fed to the load device 12; a first switch S1 for connecting the trolley voltage VL that is an incoming voltage from the trolley feeder 10 and the generator voltage VR in series; a diode (second rectifying means) D1 that is connected in parallel with a pair of the diode bridge 05 and the first switch S1; a second switch S2 that is connected in series therewith; a generator voltage detector 06 that detects the generator voltage VR; a generator current detector 07 that detects a generator current IR; a trolley voltage detector 08 that detects the trolley voltage VL; and a trolley current detector 09 that detects a trolley current IL.

The diode bridge 05 may be replaced with a full converter that consists of a semiconductor switching element, and the diode D1 may be replaced with a reverse blocking conduction switching element configured with a semiconductor. As the second rectifying means D1, one having a smaller forward voltage during energization than that of the first rectifying means 05 is used for automatically commutating a current that has been passing from the trolley feeder 10 to the first rectifying means 05 to the second rectifying means D1 when switching from the diesel boost mode to the diesel mode.

Reference signs VL, IL, and PL in the drawings denote a trolley voltage, a trolley current, and a trolley power received from the trolley feeder 10, ID1 denotes a current that flows through the diode D1, and IR, VR and PR denote an output current, an output voltage, and an output of the diode bridge 05. Because an output of the diode bridge 05 is one obtained by rectifying an output of the generator 04, these voltage VR, current IR, and output PR are called a generator voltage, a generator current, and a generator output, respectively herein. Also, the load device 12 is a DC load, and Vd, Id, and Pd indicate a DC voltage, a DC current, and a load, respectively.

The control means 20 inputs the generator voltage VR detected by the generator voltage detector 06, the generator current IR detected by the generator current detector 07, the trolley voltage VL detected by the trolley voltage detector 08, and the trolley current IL detected by the trolley current detector 09, and controls drive of the prime mover 03, drive of the generator 04, opening and closing of the first to third switches S1, S2, S3, and opening and closing of the circuit breaker BR and the switch CT.

As is obvious from Fig. 1, a major characteristic of the present invention is that the diode D1 that is rectifying means and the second switch S1 are arranged in parallel with a pair of the diode bridge 05 and the first switch S1.

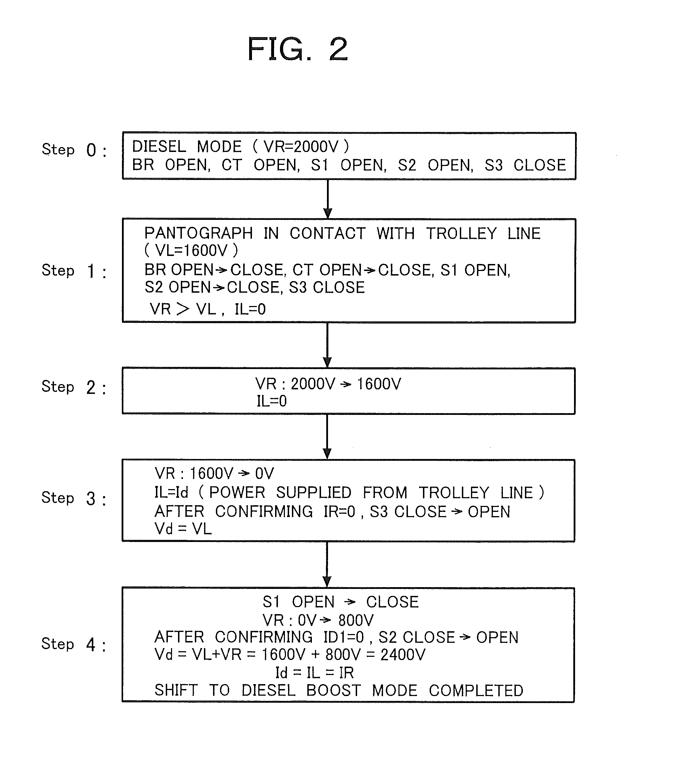

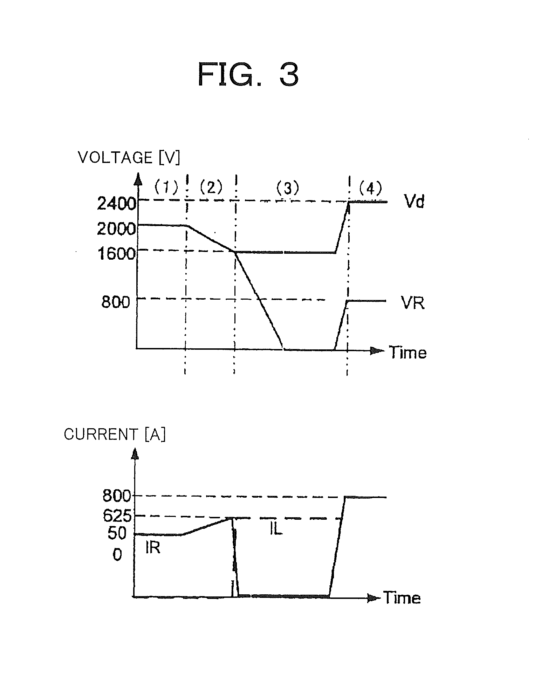

Hereinafter, a procedure of proceeding from the diesel mode of using only the generator voltage VR to the diesel boost mode of making the generator voltage VR and the trolley voltage VL serial and feeding the generator voltage VR and the trolley voltage VL to the load device 12 is explained using Figs. 2 and 3.

Step 0 in Fig. 2 shows the diesel mode, and to supply only an output of the diode bridge 05 to the load device 12, the third switch S3 is in a closed state, and the first switch S1, the second switch S2, and the switch CT are in an opened state, and the generator voltage VR is for example 2000 V. In this case, the generator voltage VR is equal to the applied voltage Vd to the load device 12 ((1) in Fig. 3).

When the control means 20 receives a diesel boost mode start command in this state, the process proceeds to Step 1, the pantograph 11 is brought into contact with the trolley feeder 10, and the circuit breaker BR, the switch CT, and the second switch S2 are closed. At this time, the control means 20 can sense that the trolley voltage VL supplied from the trolley feeder 10 is for example 1600 V. It should be noted that because, while the voltage of the diode D1 on the anode side is 1600 V, that on the cathode side is 2000 V, the diode D1 is in a reverse bias state, and a current does not flow through the second switch S2. That is, the trolley current IL does not flow. Also, the first switch S2 maintains an opened state.

Next, the process proceeds to Step 2, and to reverse the voltage difference between the trolley voltage VL and the generator voltage VR, the generator voltage VR is lowered from the current voltage 2000 V toward 0 V ((2) in Fig. 3). Until the generator voltage VR is lowered to 1600 V, the diode D1 is in a reverse bias state as in Step 1; thus, a current does not flow. That is, the trolley current IL does not flow.

When the generator voltage VR becomes 1600 V or less, the process proceeds to Step 3, the anode voltage of the diode D1 becomes 1600 V, and the cathode voltage becomes 1600 V or less; therefore, the diode D1 is in an energized state, and the trolley current IL is supplied to the load device 12 through the diode D1 and the second switch S2. On the other hand, because the generator current IR no longer flows through the diode bridge 05, the control means 20 opens the third switch S3 after confirming current zero. In this state, only a power from the trolley is being supplied to the load device 12. That is, the applied voltage Vd to the load device 12 becomes the trolley voltage VL ((3) in Fig. 3).

Then, the process proceeds to Step 4, and moves on to a procedure of serializing the generator voltage VR and the trolley voltage VL. To parallelize the generator output VR in a 0-V state with the diode D1, the first switch S1 is closed. Also, the generator voltage VR is targeted to be raised to 800 V. When the generator voltage VR is made large, a reverse bias is applied to the diode D1; thus, the diode current ID1 becomes zero, and the second switch S2 is opened after confirming current zero. Accordingly, the trolley current IL flows through the diode bridge 05.

When the generator voltage VR becomes 800 V, the voltage Vd applied to the load 12 is, in addition to the trolley voltage 1600 V, 2400 V in total, and the voltage applied to the load device 12 can be increased in the diesel boost mode. Also, the trolley current IL and the generator current IR are equal and become the load current Id, and the ratio of the trolley power PL and the generator output PR is equal to the voltage difference, and is PL:PR=2:1. Accordingly, even when the generator output PR is made equal to that in the diesel mode, a power that is three times larger than the generator output can be supplied to the load 12 in the diesel boost mode ((4) in Fig. 3). Here, the load voltage is made 2400 V because, for example, the load device 12 is an inverter configured with a semiconductor switching element with the rating of 4500 V and a drive motor that is driven by the inverter, and it is preferable to make the series voltage of the inverter approximately 2000 V to 2600 V. On the contrary, when the trolley voltage VL (=1600 V) is directly used as the series voltage of the inverter, a large current is necessary, as compared with the time when the voltage is 2400 V, in a case that a same output is supplied from an inverter to a motor that is connected to the inverter, and it is necessary to be compatible with a large current in terms of designs of the inverter and the motor. By using the trolley power feeding circuit compatible with the diesel boost according to the present invention, necessity for compatibility with a large current of the inverter and the motor can be avoided.

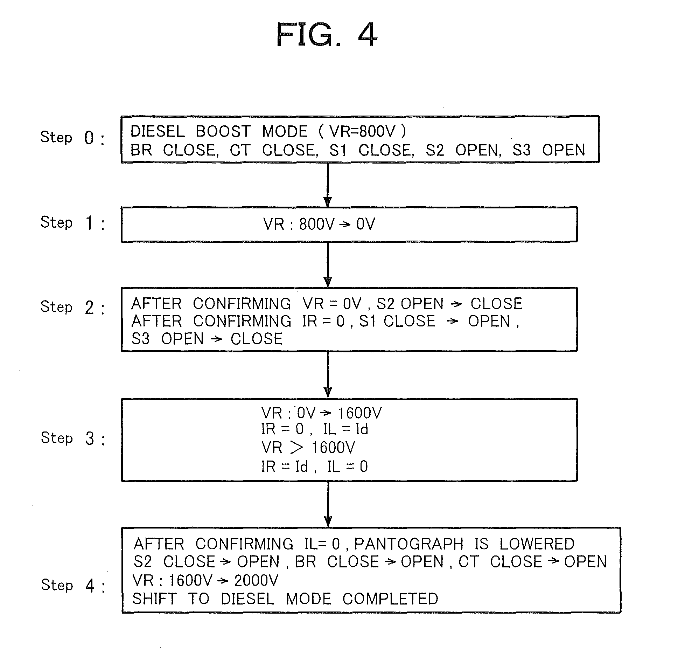

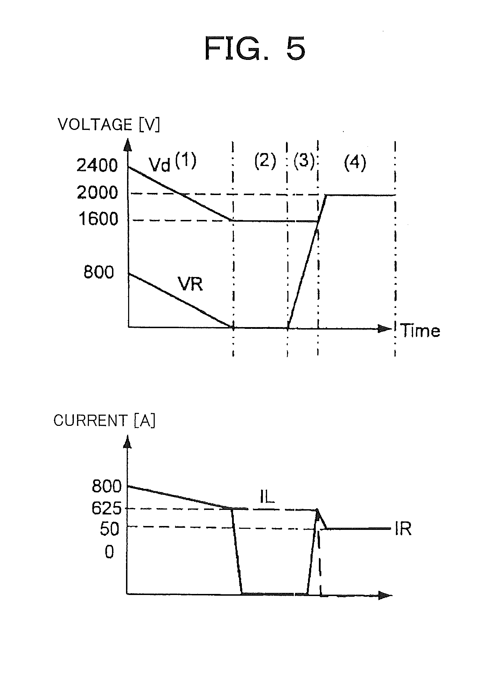

Next, a procedure of returning from the diesel boost mode to the diesel mode is explained using Figs. 4 and 5.

Step 0 in Fig. 4 shows the diesel boost mode, the circuit breaker BR, the switch CT, and the first switch S1 are in a closed state, and the second switch S2 and the third switch S3 are in an opened state.

When the control means 20 receives a diesel boost mode cancel command in this state, the process proceeds to Step 1, and the generator voltage VR is lowered to 0 V ((1) in Fig. 5).

Next the process proceeds to Step 2, and the second switch S2 is closed after confirming that the generator voltage VR is 0 V. The diode bridge 05 with the generator output VR (0 V) is in a state that at least two diodes are connected in series, and has a larger forward voltage than that of the diode D1 configured with a single diode or configured in a parallel state. Accordingly, the trolley current IL that has been passing from the trolley feeder 10 through the diode bridge 05 is commutated to the diode D1, and the generator current IR becomes zero. After confirming that the generator current IR is zero, the first switch S1 is opened, and the third switch S3 is closed. As a result, the trolley voltage VL and the generator voltage VR are parallelized ((2) in Fig. 5). It should be noted that because the generator voltage VR is zero, a current does not flow through the third switch S3.

Thereafter, the process proceeds to Step 3, and the generator voltage VR is raised to 1600 V, which is the trolley voltage VL, or more ((3) in Fig. 5). Until the generator voltage VR exceeds 1600 V, the generator current IR never flows. When the generator voltage VR exceeds 1600 V, a power supply to the load device 12 switches a power supply from the trolley feeder 10 to a power supply from the diode bridge 05.

At Step 4 when the trolley current IL has become zero, the pantograph 11 is lowered, and then the circuit breaker BR, the switch CT, and the second switch S2 are opened. Also, at the time when the generator voltage VR reaches 2000 V ((4) in Fig. 5), a shift to the diesel mode is completed.

In the present embodiment, as mentioned above, opening of all switches including the first switch S1 that is connected in series with the generator output VR is possible in a state that a conduction current is zero. Accordingly, life of the switches can be extended; as a result, maintenance of the power supply circuit 30 and an electric drive vehicle that installs the power supply circuit 30 therein can be made easy.

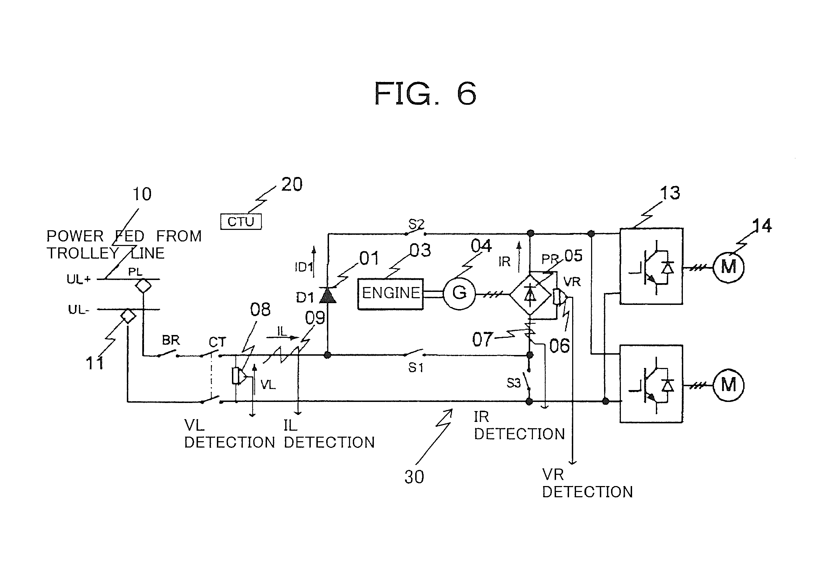

Fig. 6 shows a system including motors 14 and inverters for motor drive 13 as the load device 12 in Fig. 1. In the present example, the two motors 14 are included, and the motors 14 are driven by the separate inverters 13. DC voltages of the inverters 13 are common, and the DC voltage of the load device 12 explained above is the DC voltage of the inverter 13. Although Fig. 6 shows an example of including two motors, a pair of the motor 14 and the inverter for motor drive 13 may be included. Also, the inverter 13 is configured with a switching element with the rating of, for example, 4500 V, and the DC voltage of the inverter 13 is appropriately 2400 V to 2600 V approximately. Accordingly, in a case that the trolley voltage is approximately 1400 V to 1600 V, the ratio of the inverter DC voltage and the trolley voltage is 1.5-fold or more. When the DC voltage of the inverter is 1.5-fold larger than the trolley voltage or more, it is desirable to receive a power from the trolley in the diesel boost system to elicit performance of the inverter.

### Second Embodiment

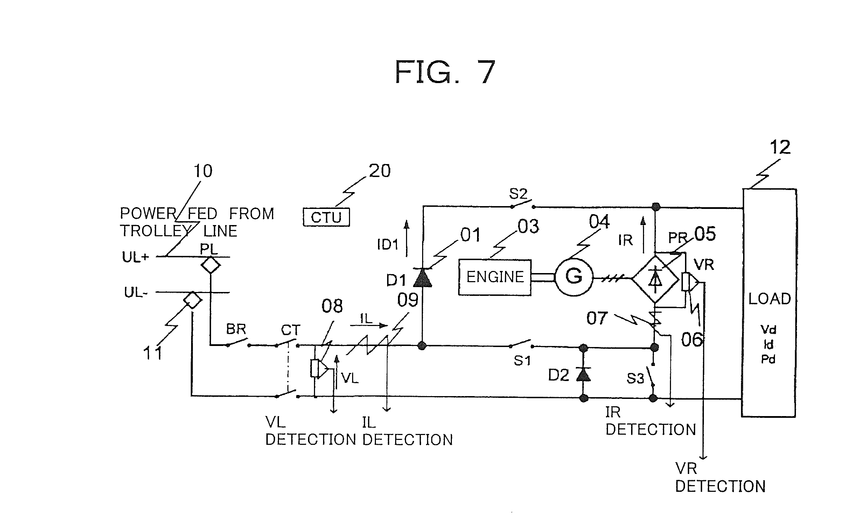

In the second embodiment of the present invention, as shown in Fig. 7, a second diode D2 is provided in parallel with the third switch S3 to cope with a fall-off of the pantograph 11.

In an electric drive vehicle in the present example, because the trolley voltage VL is applied to the diode D2 at reverse bias in the diesel boost mode, a current never flows through the diode D2. Nevertheless, the circuit for a current opens in the circuit in the first embodiment in a state that the pantograph 11 carelessly detaches from and falls off the trolley feeder 10, and thus a power cannot be supplied to the load device 12 until the third switch S3 is closed. In contrast, in the present embodiment, at the time of a pantograph fall-off, the current circuit switches from that via the trolley feeder to that via the diode D2, and thus a power supply is never interrupted. After sensing a fall-off, by closing the third switch S3 and making the generator output VR 2000 V, which is the same as that in the diesel mode, a supplied power is reduced, but it becomes possible to return to a normal state while maintaining a power supply. Accordingly, in a case that the load device 12 is a motor drive circuit, it becomes possible to avoid a torque being zero, and a shift to the diesel mode is possible without stopping the electric drive vehicle.

### Third Embodiment

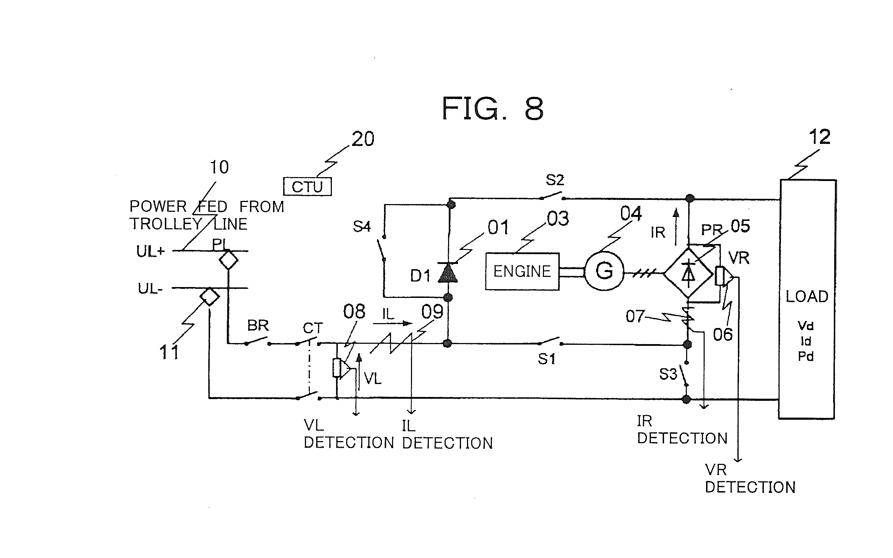

In the third embodiment of the present invention, as shown in Fig. 8, a fourth switch 4 is provided in parallel with the diode D1 to realize a direct mode of making the trolley voltage VL a DC voltage of the load device 12.

In the present embodiment, by closing the circuit breaker BR, the switch CT, the fourth switch S4, and the second switch S2, the trolley voltage VL can be made the load voltage Vd. It should be noted that, in a case that the load is an inverter configured with a semiconductor switching element with the rating of 4500 V, it is desirable to feed a power from the trolley with a voltage of approximately 2400 V to 2600 V.

A characteristic of the present embodiment is that in the direct mode, conduction loss at the diode D1 can be prevented because the trolley current IL is supplied through the fourth switch S4 to the load device 12 without flowing through the diode D1. Without conduction loss at the diode D1, in the direct mode, it is not necessary for a cooling system of a system to cool the diode D1, and thus system efficiency can be improved.

### INDUSTRIAL APPLICABILITY

The present invention can be used for an electric drive vehicle such as a mining truck including a power supply circuit that receives a trolley power from a trolley feeder.

### REFERENCE SIGNS LIST

- 03: Prime mover
- 04: Generator
- 05: Diode bridge
- 06: Generator voltage detector
- 07: Generator current detector
- 08: Trolley voltage detector
- 09: Trolley current detector
- 10: Trolley feeder
- 11: Pantograph
- 12: Load device
- 13: Inverter
- 14: Motor
- 20: Control means
- 30: Power supply circuit
- D1: First diode
- D2: Second diode
- S1: First switch
- S2: Second switch
- S3: Third switch
- S4: Fourth switch
- BR: Circuit breaker
- CT: Switch

## Claims

1. An electric drive vehicle comprising: a prime mover; a generator driven by the prime mover; a power supply circuit that uses a generator voltage obtained by rectifying a generator output and a trolley voltage obtained by rectifying an incoming power from a trolley feeder as a driving voltage of a load device; the load device driven by the driving voltage output from the power supply circuit; and control means that controls drive of the prime mover and opening and closing of a plurality of switches and the like included in the power supply circuit to switch a power feed mode of the driving voltage fed to the load device between a diesel mode of feeding only the generator voltage to the load device and a diesel boost mode of feeding the generator voltage and the trolley voltage that are connected in series to the load device, wherein
the power supply circuit is configured by connecting a pair of second rectifying means that rectifies the incoming power from the trolley feeder and a second switch connected in series therewith in parallel with a pair of first rectifying means that rectifies the generator output and a first switch connected in series therewith, and connecting a third switch in parallel with the second switch.

2. The electric drive vehicle according to any one of Claims 1 to 3, wherein as the second rectifying means, one having a smaller forward voltage during energization than that of the first rectifying means is used.

3. The electric drive vehicle according to any one of Claims 1 to 4, wherein, in a case of switching the power feed mode of the driving voltage to the load device from the diesel mode to the diesel boost mode, the control means controls drive of the prime mover to vary the generator voltage to be equal to or less than an on-voltage of the second rectifying means temporarily.

4. The electric drive vehicle according to any one of Claims 1 to 4, wherein, in the case of switching the power feed mode of the driving voltage to the load device from the diesel boost mode to the diesel mode, the controls means controls the drive of the prime mover to vary the generator voltage to be equal to or less than the on-voltage of the second rectifying means temporarily.

5. The electric drive vehicle according to any one of Claims 1 to 6, wherein the load device is a motor and an inverter for motor drive, and as the inverter for motor drive, one that is driven most efficiently with a driving voltage of the motor in the diesel boost mode is used.

6. The electric drive vehicle according to any one of Claims 1 to 7, wherein third rectifying means is connected in parallel in a power receiving circuit that receives a power from the trolley feeder.

7. The electric drive vehicle according to any one of Claims 1 to 8, wherein a fourth switch is connected in parallel with the second rectifying means.

## Amended claims

### Amended claims under Art. 19.1 PCT

**1.** An electric drive vehicle comprising:
● a prime mover (03);
● a generator (04) driven by the prime mover (03);
● a power supply circuit (30) that uses a generator voltage (VR) obtained by rectifying a generator output (PR) and a trolley voltage (VL) obtained by rectifying an incoming power from a trolley feeder (10) as a driving voltage of a load device (12);
● the load device (12) driven by the driving voltage output from the power supply circuit (30); and
● control means (20) that is configured to control a drive of the prime mover (03) and to open and close a plurality of switches (A1, S2, S3, CT, BR) and the like included in the power supply circuit (30) to switch a power feed mode of the driving voltage fed to the load device (12) between a diesel mode of feeding only the generator voltage (VR) to the load device (12) and a diesel boost mode of feeding the generator voltage (VR) and the trolley voltage (VL) that are connected in series to the load device (12),
wherein the power supply circuit (30) is configured by:
● connecting a pair of second rectifying means (D1) that rectify the incoming power from the trolley feeder (10) and a second switch (S2) connected in series therewith in parallel with a pair of first rectifying means (05) that rectify the generator output (PR) and a first switch (S1) connected in series therewith, and
● connecting a third switch (S3) that is closed when an output of the first rectifying means (05) is fed to the load device (12).

**2.** The electric drive vehicle according to Claim 1, wherein as the second rectifying means (D1), one having a smaller forward voltage during energization than that of the first rectifying means (05) is used.

**3.** The electric drive vehicle according to Claim 1, wherein, in a case of switching the power feed mode of the driving voltage to the load device (12) from the diesel mode to the diesel boost mode, the control means (20) is configured to control the drive of the prime mover (03) to vary the generator voltage (VR) to be equal to or less than an on-voltage of the second rectifying means (D1) temporarily.

**4.** The electric drive vehicle according to Claim 1, wherein, in the case of switching the power feed mode of the driving voltage to the load device (12) from the diesel boost mode to the diesel mode, the controls means (20) is configured to control the drive of the prime mover (03) to vary the generator voltage (VR) to be equal to or less than the on-voltage of the second rectifying means (D1) temporarily.

**5.** The electric drive vehicle according to Claim 1, wherein the load device (12) is a motor (14) and an inverter (13) for motor drive, and as the inverter (13) for motor drive, one that is driven most efficiently with a driving voltage of the motor in the diesel boost mode is used.

**6.** The electric drive vehicle according to Claim 1, wherein third rectifying means (D2) is connected in parallel in a power receiving circuit that receives a power from the trolley feeder (10).

**7.** The electric drive vehicle according to Claim 1, wherein a fourth switch (S4) is connected in parallel with the second rectifying means (D1).
